# EUROPÄISCHE PATENTSCHRIFT

(11) **EP 2 568 078 B1**
(45) Veröffentlichungstag und Bekanntmachung des Hinweises auf die Patenterteilung: **02.11.2016**
(21) Anmeldenummer: 12195642.9
(22) Anmeldetag: 14.07.2010
(51) Int. Cl.: D21B 1/34, D21D 5/04, D21D 5/16

(54) **Stofflöser**
Pulper
Désintégrateur

(30) Priorität: 13.10.2009 DE 102009045613
(43) Veröffentlichungstag der Anmeldung: 13.03.2013
(62) Teilanmeldung aus: 10736653.6
(73) Patentinhaber: Voith Patent GmbH, 89522 Heidenheim (DE)
(72) Erfinder: Gottschalk, Gerd, 88214 Ravensburg (DE); Fey, Jürgen, 88287 Grünkraut (DE); Brettschneider, Werner, 88287 Grünkraut (DE); Ott, Elmar, 88213 Ravensburg (DE)

(56) Entgegenhaltungen:
- EP-A1- 1 679 403
- EP-A1- 1 693 505
- WO-A1-98/49389
- WO-A1-03/033152
- CN-U- 2 107 484
- DE-A1- 10 116 367
- US-A- 2 703 533

## Beschreibung

Die Erfindung betrifft einen Stofflöser zur Zerkleinerung und Suspendierung von Faserstoff bestehend aus einem Behälter und mindestens einem im Behälter angeordneten Rotor zum Umwälzen einer im Behälter befindlichen Faserstoffsuspension sowie mindestens einem starren Sieb, dessen mit runden Sieböffnungen versehene Siebfläche vom Rotor zumindest größtenteils überstrichen wird.

Stofflöser dieser Art werden hauptsächlich angewendet, um trockenes Zellstoffmaterial oder Altpapier der unterschiedlichsten Zusammensetzung in Suspension zu bringen. Sie bestehen im Wesentlichen aus einem Behälter für die Suspension und mindestens einem Rotor. Das eingetragene Material wird lose in großen Stücken, Bahnen oder gepressten Ballen mit Wasser intensiv vermischt, wobei durch den Rotor ein hydraulischer Stoffumtrieb erzeugt wird. Verständlicherweise werden solche Vorrichtungen optimiert, wobei im Wesentlichen eine schnelle und kraftwirtschaftliche Auflösung angestrebt wird. In vielen Fällen wird der Rotor in unmittelbarer Nähe eines ebenen Siebes angeordnet, das er frei von Verstopfungen hält. Durch die Öffnungen des Siebes wird der aufgelöste Stoff von groben Verunreinigungen sortiert und als Suspension abgezogen.

Als Standardtyp für einen Stofflöser hat sich ein senkrecht stehender zylindrischer Behälter mit einem Rotor im Bodenbereich durchgesetzt. In diesen Behälter wird Wasser und der aufzulösende Stoff von oben zugegeben und mit Hilfe des Rotors eine Trombenströmung in der Suspension erzeugt, bei der also im inneren Bereich der Stoff vom Rotor nach unten gezogen und im Bodenbereich radial nach außen gedrückt wird, wodurch sich eine Umtriebsströmung ergibt.

Eine weitere typische Bauart ist der oben offene Stofflöser-Behälter mit seitlich eingesetztem Rotor. Dort wird die Suspension etwa waagerecht zum Rotor gefördert und an der den Rotor tragenden Seitenwand des Behälters umgelenkt.

Diese hydraulisch oft weniger günstige Form hat den Vorteil, unter der Papiermaschine als Ausschussauflöser Platz zu finden.

Das erwähnte Sieb dient zunächst dazu, eine Trennung vorzunehmen, bei der die bereits genügend aufgelösten Anteile des Papierstoffes durch die Öffnungen des Siebes hindurch abgezogen und noch nicht genügend Aufgelöstes zurückgehalten wird. Dadurch wird in an sich bekannter Weise der Auflöseprozess ökonomischer, insbesondere kann der Stofflöser, wenn gewünscht, kontinuierlich betrieben werden. Störstoffe, also im Wesentlichen papierfremde Bestandteile, werden zurückgehalten bzw. aussortiert.

In vielen Fällen trägt dieses Sieb aber auch dazu bei, den Auflösevorgang zu verstärken. Die dem Siebblech zugewandte Seite des Rotors tritt nämlich mit den Einlaufkanten der Sieböffnungen in Wechselwirkung. Zwar wird immer ein gewisser Abstand zwischen Rotor und Siebblech eingehalten, doch genügen die dabei auftretenden Scherkräfte, die Papierstoffteilchen weiter zu zerlegen. Größere Stücke können auch den Abstand zwischen Sieb und Rotor überbrücken, so dass eine direkte Schnittwirkung eintritt. In welcher Form und in welcher Intensität diese Vorgänge stattfinden, hängt von den Anforderungen und der Auslegung des Stofflösers ab.

Die WO 98/49389 A1 beschreibt hierzu eine Lösung bei der der Durchsatz über am Rotor befestigte Zusatzelemente vergrößert werden soll, die Druck und Unterdruck erzeugen.

Es ist auch bekannt, die soeben beschriebene Auflösewirkung dadurch weiter zu verstärken, dass die Siebbleche an der Einlaufseite mit Leisten versehen werden, wie es z.B. aus der DE 101 16 367 A1 bekannt ist.

Aus der WO 03/033152 A1 ist eine Siebplatte bekannt, deren Öffnungen durch Laser- oder Wasserstrahl eingebracht worden sind. Diese Öffnungen sind nicht rund, sondern mit Ecken versehen und vorzugsweise mosaikartig auf der Siebplatte verteilt. Dadurch soll die Auflösewirkung verstärkt werden.

Die bekannten Siebe für solche Stofflöser werden zumeist mit kreisrunden Bohrungen oder, wie in der EP1679403 A1 beschrieben, mit länglichen Sieböffnungen versehen, wobei ein Kompromiss gefunden werden muss zwischen der Forderung nach optimaler Klassierung, also möglichst kleinen Sortieröffnungen, und der Forderung nach möglichst hohem Durchsatz, also möglichst großer offener Fläche.

Die Charakteristik eines solchen Siebes ergibt sich im Wesentlichen aus Größe, Form und Anzahl der sich darin befindlichen Sieböffnungen.

Neben einem großen Durchsatz wird dabei auch eine hohe Festigkeit gegen den hydraulischen Druck angestrebt.

Um dem gerecht zu werden, wird in der DE19547585 ein Sieb mit einer Stütz- und einer Sortierschicht vorgeschlagen.

Problematisch bleiben jedoch die Sieböffnungen, insbesondere hinsichtlich Herstellung, Durchsatz und Verstopfungsgefahr.

Die Aufgabe der Erfindung ist es daher, bei diesen Sieben einen hohen Durchsatz bei möglichst geringem Energiebedarf und möglichst großer wirksamer Schnittkantenlänge zu gewährleisten.

Erfindungsgemäß wurde die Aufgabe durch die Merkmale des Anspruchs 1 gelöst. Dabei sollten die Radien einen tangentialen Übergang aufweisen und sich hinsichtlich Krümmungsradius und/oder Krümmungsrichtung unterscheiden.

Die runde Ausführung der Sieböffnungen wirkt sich positiv auf eine Herstellung mittels Laserschneiden aus, da keine Geschwindigkeitsänderung wie ansonsten beim Schneiden von Ecken erforderlich ist.

Außerdem verbessert sich durch die ausschließlich runden Kanten der Sieböffnungen die Wirkung des Rotors beim Überstreichen derselben erheblich.

Hinzu kommt neben einer verminderten Verstopfungsgefahr auch die Möglichkeit einer Optimierung hinsichtlich offener Fläche und Festigkeit des Siebes.

Dabei sollten die Kreisabschnitte unterschiedlich lang sein und unterschiedliche Radien aufweisen, wobei sich lange und kurze Kreisabschnitte bzw. große und kleine Radien abwechseln und lange, vorzugsweise gleich große Kreisabschnitte große Radien und kurze, vorzugsweise gleich große Kreisabschnitte kleine Radien haben.

Untersuchungen hierzu haben ergeben, dass ein optimales Verhältnis zwischen dem größten und dem kleinsten Radius der Kreisabschnitte zwischen 3 und 20, vorzugsweise zwischen 5 und 15 zu finden ist.

In den meisten Fällen ist es dabei von Vorteil, wenn der kleinste Radius der Kreisabschnitte zwischen 1,5 und 3 mm und/oder der größte Radius der Kreisabschnitte zwischen 10 und 30 mm liegt.

Des weiteren beträgt die Anzahl der Kreisabschnitte des Querschnitts der Sieböffnungen 4.

Entsprechend den Anforderungen an den Stofflöser bzw. dessen Konstruktion sowie der Qualität und Zusammensetzung der Faserstoffsuspension kann es von Vorteil sein, wenn alle Sieböffnungen der Siebfläche gleich ausgebildet sind.

Zur Beeinflussung der Stabilität des Siebes und/oder deren Charakteristik kann es aber demgegenüber vorteilhaft sein, wenn die Sieböffnungen der Siebfläche die gleiche Querschnittsform besitzen, aber unterschiedlich groß ausgebildet sind.

Aus gleichem Grund verlaufen mehrere Kreisabschnitte einer Sieböffnung bezogen auf die Mitte des Querschnitts der Sieböffnung konvex gekrümmt.

Zur Steigerung des Durchsatzes bei weitestgehend gleicher Siebfeinheit ist es von Vorteil, wenn die Sieböffnungen einen länglichen Querschnitt aufweisen.

Zur optimalen Ausnutzung der Siebfläche können die Sieböffnungen einer Siebfläche, insbesondere auch in Abhängigkeit von ihrer Querschnittsform, gleich oder aber unterschiedlich ausgerichtet sein.

Bei vielen Querschnittsformen ist es bei unterschiedlicher Ausrichtung vorteilhaft, wenn benachbarte Sieböffnungen um 90° oder 180° versetzt zueinander angeordnet sind.

Außerdem kann einer Verstopfung entgegengewirkt werden, wenn sich der Querschnitt einer Sieböffnung in Durchströmungsrichtung der Faserstoffsuspension vorzugsweise stetig vergrößert.

Als Stofflöser werden hier auch Nachauflöse-Maschinen, beispielsweise Fiberizer verstanden.

Nachfolgend soll die Erfindung an mehreren Ausführungsbeispielen näher erläutert werden. In der beigefügten Zeichnung zeigt:
- Figur 1:: einen Querschnitt durch einen stehenden Stofflöser;
- Figur 2:: einen Querschnitt durch einen liegenden Stofflöser;
- Figur 3:: eine Draufsicht auf ein Sieb 3 mit Rotor 4;
- Figur 4:: einen Teilquerschnitt durch ein Sieb 3 und
- Figuren 5 bis 8:: verschiedene Sieböffnungen 6.

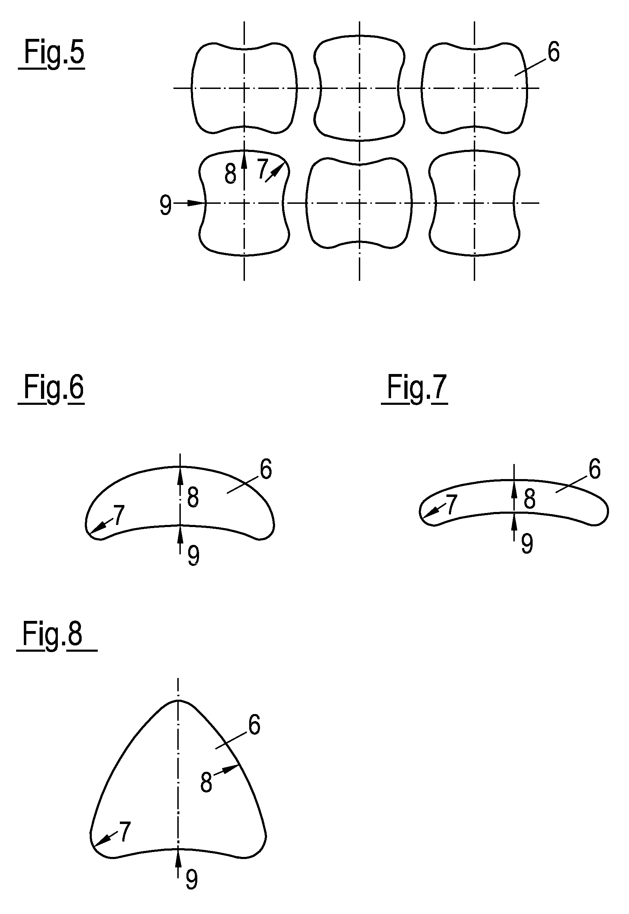

Die Beispiele nach den Fig. 5, 7 und 8 sind keine Ausführungsformen der beanspruchten Erfindung, sondern dienen dazu, das Verständnis der Erfindung zu erleichtern.

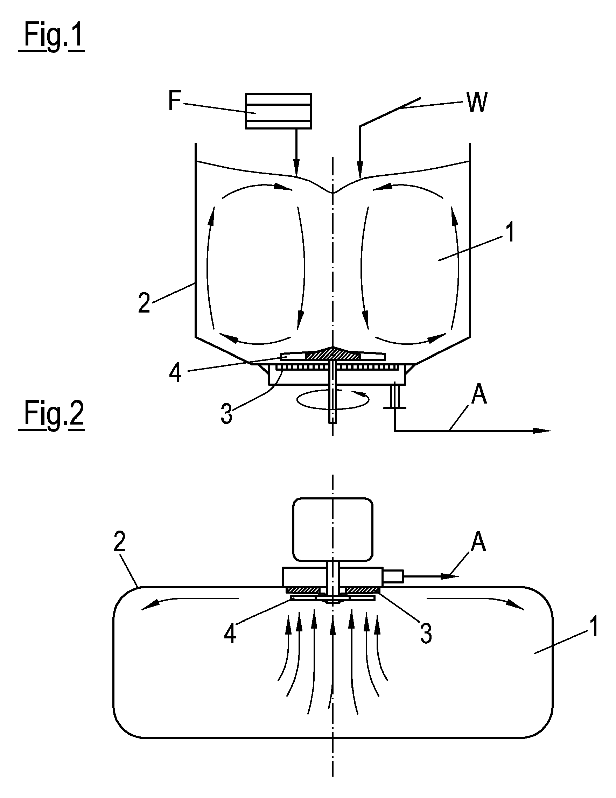

Die häufigste Form eines Stofflösers, bei dem die Erfindung angewendet werden kann, ist der stehende, zylindrische und oben offene Stofflöser gemäß Figur 1, bei dem sich Sieb 3 und Rotor 4 im Bodenbereich befinden. Beim Betrieb werden Papierstoff F und Wasser W in den Behälter 2 eingetragen. Die fertige pumpfähige Faserstoffsuspension 1 wird durch das Sieb 3 hindurch als Gutstoff A abgezogen. Solche Stofflöser sind seit langem bekannt.

Das gleiche gilt auch für Stofflöser gemäß Figur 2. Wie bereits erwähnt, kann ein solcher liegender Behälter 2 besonders vorteilhaft unter einer Papiermaschine zur Auflösung von Produktionsausschuss eingesetzt werden. Eine weitere Anwendung ist der Sekundärstofflöser, z.B. gemäß DE-A-23 45 735, dessen Siebblech mit entsprechend der Erfindung veränderten Sieböffnungen versehen ist.

Gemeinsam ist allen Ausführungen, dass die Siebfläche des starren und kreisrunden Siebes 3 größtenteils vom Rotor 4 bzw. dessen Rotorflügeln überstrichen wird, wobei der Rotor 4 in Durchströmrichtung der Faserstoffsuspension 1 vor dem Sieb 3 rotiert.

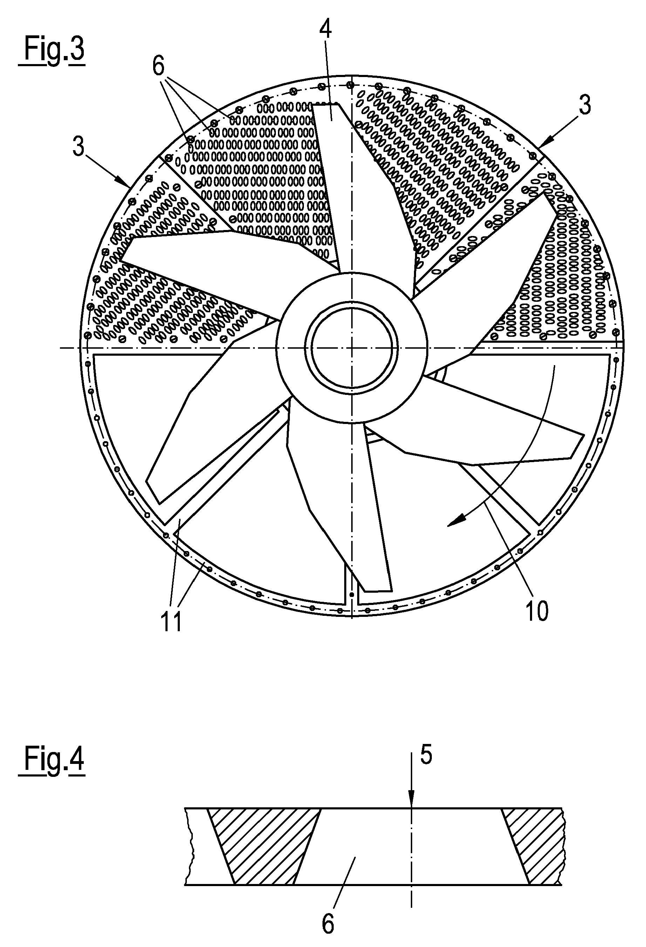

Hierzu zeigt Figur 3 einen Rotor 4, der konzentrisch mit einem ringförmigen ebenen Sieb 3 im ansonsten nicht dargestellten Stofflöser angeordnet ist. Der Rotor 4 ist mit Flügeln versehen und so dimensioniert, dass er bei Rotation 10 die Siebfläche des Siebes 3 vollständig oder zumindest größtenteils überstreicht.

Erfindungsgemäß wird der Querschnitt der Sieböffnungen 6 dieses Siebes 3 ausschließlich von Kreisabschnitten begrenzt, wobei zumindest zwei Kreisabschnitte unterschiedliche Radien 7,8,9 aufweisen.

Bei größeren Sieben 3 ist es üblich, diese zunächst als Ringsegmente herzustellen, die dann im Stofflöser zu einem gesamten Sieb 3 zusammengesetzt werden. Bei dem hier gezeigten Beispiel besteht das ganze Sieb 3 aus insgesamt acht Segmenten, von denen vier gezeichnet sind.
Die Siebsegmente können an einem darunter liegenden Traggestell 11 befestigt werden.
Wie in Figur 4 dargestellt, sollte sich der Querschnitt der Sieböffnung 6 in Durchströmrichtung 5 kontinuierlich vergrößern, was einem Verstopfen der Sieböffnungen 6 entgegenwirkt.
Dabei bereitet die Herstellung der Sieböffnungen 6 mit der erfinderischen Querschnittsform wie auch eine Querschnittsveränderung beim Laserschneiden keinerlei Probleme. Im Gegenteil so kann das Schneidgerät bei fehlenden Ecken gleichmäßiger entlang der zu schneidenden Kontur bewegt werden.

Die Sieböffnungen 6 gemäß Figur 5 werden von vier langen Kreisabschnitten mit großem Radius 8,9 und vier kurzen Kreisabschnitten mit kleinem Radius 7 gebildet. Zwar folgt auch hier ein großer Radius 8,9 einem kleinen 7, jedoch befindet sich der kleine Radius 7 zwischen zwei unterschiedlich gekrümmten Kreisabschnitten. Während ein großer Kreisabschnitt bezüglich der Mitte der Sieböffnung konvex gekrümmt verläuft, ist der andere konkav gekrümmt.

Wenn diese Sieböffnungen 6, wie hier, in mehreren parallelen und senkrecht zueinander verlaufenden Reihen angeordnet werden, wobei ein konvex gekrümmter 8 Kreisabschnitt einem konkav gekrümmten 9 Kreisabschnitt einer benachbarten Sieböffnung 6 gegenüberliegt, so lassen sich gleich breite Stege zwischen den Sieböffnungen 6 realisieren, was sich positiv auf die Stabilität des Siebes auswirkt. Außerdem ergibt sich dabei auch eine sehr große offene Siebfläche verbunden mit einem großen Durchsatz.

Die in den Figuren 6 und 7 dargestellten Sieböffnungen 6 werden jeweils von zwei kurzen Kreisabschnitten mit kleinem Radius 7 und zwei langen Kreisabschnitten mit großem Radius 8 gebildet. Dabei ist ein langer Kreisabschnitt bezüglich der Mitte der Sieböffnung 6 konvex und der gegenüberliegende konkav gekrümmt.

Während die langen Kreisabschnitte bei Figur 7 den gleichen Kreismittelpunkt haben, ist in Figur 6 der Radius des konvexen, langen Kreisabschnitts 8 kleiner als der Radius des konkaven Kreisabschnitts 9.
Die Sieböffnung 6 gemäß Figur 8 hat drei kurze, konvexe Kreisabschnitte mit kleinem Radius 7, zwei lange Kreisabschnitte mit großem Radius 8, die hinsichtlich der Mitte der Sieböffnung 6 konvex verlaufen sowie einen langen, konkaven Kreisabschnitt mit großem Radius 9.

Wegen der in allen Beispielen gekrümmten Öffnungskanten der Sieböffnungen 6 kann die Auflösewirkung beim Zusammentreffen mit den an ihnen dicht vorbei bewegten Rotorflügeln 4 erheblich verbessert werden.
Hinzu kommt, dass der Durchlass von großen, starren Teilen behindert werden kann.

Der Auflöseeffekt kann außerdem durch eine entsprechende Ausrichtung der Sieböffnungen 6 verbessert werden.

## Patentansprüche

1. Stofflöser zur Zerkleinerung und Suspendierung von Faserstoff (F) bestehend aus einem Behälter (2) und mindestens einem im Behälter (2) angeordneten Rotor (4) zum Umwälzen einer im Behälter (2) befindlichen Faserstoffsuspension (1) sowie mindestens einem starren Sieb (3), dessen mit runden Sieböffnungen (6) versehene Siebfläche vom Rotor (4) zumindest größtenteils überstrichen wird, wobei der Querschnitt der Sieböffnungen (6) ausschließlich von vier unterschiedlich langen Kreisabschnitten mit unterschiedlichen Radien begrenzt wird und sich lange Kreisabschnitte mit großen Radien (8,9) und kürzere Kreisabschnitte mit kleineren Radien (7) abwechseln, wobei das Verhältnis zwischen dem größten (8,9) und dem kleinsten (7) Radius der Kreisabschnitte zwischen 3 und 20 liegt, ein langer Kreisabschnitt einer Sieböffnung (6) bezogen auf die Mitte des Querschnitts der Sieböffnung (6) konkav gekrümmt und drei Kreisabschnitte bezogen auf die Mitte des Querschnitts der Sieböffnung (6) konvex gekrümmt verlaufen und der Radius des konvexen, langen Kreisabschnitts (8) kleiner als der Radius des konkaven Kreisabschnitts (9) ist.

2. Stofflöser nach Anspruch 1, **dadurch gekennzeichnet, dass** das Verhältnis zwischen dem größten (8,9) und dem kleinsten (7) Radius der Kreisabschnitte zwischen 5 und 15 liegt.

3. Stofflöser nach einem der vorhergehenden Ansprüche, **dadurch gekennzeichnet, dass** der kleinste Radius (7) der Kreisabschnitte zwischen 1,5 und 3 mm liegt.

4. Stofflöser nach einem der vorhergehenden Ansprüche, **dadurch gekennzeichnet, dass** der größte Radius (8,9) der Kreisabschnitte zwischen 10 und 30 mm liegt.

5. Stofflöser nach einem der vorhergehenden Ansprüche, **dadurch gekennzeichnet, dass** alle Sieböffnungen (6) der Siebfläche gleich ausgebildet sind.

6. Stofflöser nach einem der Ansprüche 1 bis 5, **dadurch gekennzeichnet, dass** die Sieböffnungen (6) der Siebfläche die gleiche Querschnittsform besitzen aber unterschiedlich groß ausgebildet sind.

7. Stofflöser nach einem der vorhergehenden Ansprüche, **dadurch gekennzeichnet, dass** die Sieböffnungen (6) einen länglichen Querschnitt aufweisen.

8. Stofflöser nach einem der vorhergehenden Ansprüche, **dadurch gekennzeichnet, dass** die Sieböffnungen (6) einer Siebfläche gleich ausgerichtet sind.

9. Stofflöser nach einem der Ansprüche 1 bis 7, **dadurch gekennzeichnet, dass** die Sieböffnungen (6) einer Siebfläche unterschiedlich ausgerichtet sind.

10. Stofflöser nach Anspruch 9, **dadurch gekennzeichnet, dass** benachbarte Sieböffnungen (6) um 90° oder 180° versetzt zueinander angeordnet sind.

11. Stofflöser nach einem der vorhergehenden Ansprüche, **dadurch gekennzeichnet, dass** sich der Querschnitt einer Sieböffnung (6) in Durchströmungsrichtung (5) der Faserstoffsuspension (1) vorzugsweise stetig vergrößert.

## Claims

1. Pulper for comminuting and suspending fibrous material (F) consisting of a container (2) and at least one rotor (4) which is arranged in the container (2) in order to circulate a fibrous stock suspension (1) which is situated in the container (2), and at least one rigid screen (3), the screen surface of which, which is provided with round screen openings (6), is swept over at least for the greatest part by the rotor (4), the cross section of the screen openings (6) being delimited exclusively by four circular segments of different lengths and with different radii, and long circular segments with large radii (8, 9) and shorter circular segments with shorter radii (7) alternating, the ratio between the largest (8, 9) and the smallest (7) radius of the circular segments lying between 3 and 20, a long circular segment of a screen opening (6) running in a concavely curved manner in relation to the centre of the cross section of the screen opening (6) and three circular segments running in a convexly curved manner in relation to the centre of the cross section of the screen opening (6), and the radius of the convex, long circular segment (8) being smaller than the radius of the concave circular segment (9).

2. Pulper according to claims 1, **characterized in that** the ratio between the largest (8, 9) and the smallest (7) radius of the circular segments lies between 5 and 15.

3. Pulper according to either of the preceding claims, **characterized in that** the smallest radius (7) of the circular segments lies between 1.5 and 3 mm.

4. Pulper according to one of the preceding claims, **characterized in that** the largest radius (8, 9) of the circular segments lies between 10 and 30 mm.

5. Pulper according to one of the preceding claims, **characterized in that** all the screen openings (6) of the screen surface are of identical configuration.

6. Pulper according to one of Claims 1 to 5, **characterized in that** the screen openings (6) of the screen surface have the same cross-sectional shape but are configured with different sizes.

7. Pulper according to one of the preceding claims, **characterized in that** the screen openings (6) have an elongate cross section.

8. Pulper according to one of the preceding claims, **characterized in that** the screen openings (6) of a screen surface are oriented identically.

9. Pulper according to one of Claims 1 to 7, **characterized in that** the screen openings (6) of a screen surface are oriented differently.

10. Pulper according to Claim 9, **characterized in that** adjacent screen openings (6) are arranged offset by 90° or 180° with respect to one another.

11. Pulper according to one of the preceding claims, **characterized in that** the cross section of a screen opening (6) preferably increases continuously in the throughflow direction (5) of the fibrous stock suspension (1).

## Revendications

1. Pulpeur pour la désintégration et la mise en suspension de matière fibreuse (F), constitué d'un récipient (2) et d'au moins un rotor (4) disposé dans le récipient (2) pour mettre en circulation une suspension de matière fibreuse (1) se trouvant dans le récipient (2) et comprenant également un tamis rigide (3) dont la surface de tamis pourvue d'ouvertures de tamis rondes (6) est balayée au moins pour la majeure partie par le rotor (4), la section transversale des ouvertures de tamis (6) étant limitée exclusivement par quatre sections circulaires de longueurs différentes ayant des rayons différents et des sections circulaires longues de grand rayon (8, 9) et des sections circulaires plus courtes de plus petit rayon (7) étant disposés en alternance, le rapport entre le plus grand rayon (8, 9) et le plus petit rayon (7) des sections circulaires étant compris entre 3 et 20, une section circulaire d'une ouverture de tamis (6) plus longue par rapport au centre de la section transversale de l'ouverture de tamis (6) ayant une courbure concave et trois sections circulaires s'étendant avec une courbure convexe par rapport au milieu de la section transversale de l'ouverture de tamis (6), et le rayon de la section circulaire convexe longue (8) étant inférieur au rayon de la section circulaire concave (9).

2. Pulpeur selon la revendication 1, **caractérisé en ce que** le rapport entre le plus grand rayon (8, 9) et le plus petit rayon (7) des sections circulaires est compris entre 5 et 15.

3. Pulpeur selon l'une quelconque des revendications précédentes, **caractérisé en ce que** le plus petit rayon (7) des sections circulaires est compris entre 1,5 et 3 mm.

4. Pulpeur selon l'une quelconque des revendications précédentes, **caractérisé en ce que** le plus grand rayon (8, 9) des sections circulaires est compris entre 10 et 30 mm.

5. Pulpeur selon l'une quelconque des revendications précédentes, **caractérisé en ce que** toutes les ouvertures de tamis (6) de la surface de tamis sont réalisées de manière identique.

6. Pulpeur selon l'une quelconque des revendications 1 à 5, **caractérisé en ce que** les ouvertures de tamis (6) de la surface de tamis présentent la même forme en section transversale mais sont réalisées avec une taille différente.

7. Pulpeur selon l'une quelconque des revendications précédentes, **caractérisé en ce que** les ouvertures de tamis (6) présentent une section transversale allongée.

8. Pulpeur selon l'une quelconque des revendications précédentes, **caractérisé en ce que** les ouvertures de tamis (6) d'une surface de tamis sont orientées de manière identique.

9. Pulpeur selon l'une quelconque des revendications 1 à 7, **caractérisé en ce que** les ouvertures de tamis (6) d'une surface de tamis sont orientées différemment.

10. Pulpeur selon la revendication 9, **caractérisé en ce que** des ouvertures de tamis adjacentes (6) sont disposées de manière décalée les unes par rapport aux autres de 90° ou de 180°.

11. Pulpeur selon l'une quelconque des revendications précédentes, **caractérisé en ce que** la section transversale d'une ouverture de tamis (6) dans la direction d'écoulement (5) de la suspension de matière fibreuse (1) augmente de préférence de manière continue.
